(19) Europäisches Patentamt / European Patent Office / Office européen des brevets

(11) **EP 3 411 637 B1**

(12) **EUROPEAN PATENT SPECIFICATION**

(45) Date of publication and mention
of the grant of the patent:
**02.09.2020 Bulletin 2020/36**

(21) Application number: **17724898.6**

(22) Date of filing: **03.02.2017**

(51) Int Cl.:
**F24S 10/25** (2018.01)      **F24S 10/50** (2018.01)

(86) International application number:
**PCT/IB2017/050617**

(87) International publication number:
**WO 2017/134631 (10.08.2017 Gazette 2017/32)**

(54) **SOLAR AIR SYSTEM**

SONNEN/LUFT-SYSTEM

SYSTÈME D'AIR SOLAIRE ET PROCÉDÉ DE TRANSFERT DE CHALEUR UTILISANT LEDIT SYSTÈME D'AIR SOLAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2016  PL 41603316**

(43) Date of publication of application:
**12.12.2018 Bulletin 2018/50**

(73) Proprietor: **Stangreciak, Malgorzata**
**05-080 Izabelin (PL)**

(72) Inventor: **JESCHKE, Marius**
**05-080 Izabelin (PL)**

(74) Representative: **Patpol Kancelaria Patentowa Sp.
z o.o.**
**Nowoursynowska 162J**
**02-776 Warszawa (PL)**

(56) References cited:
**US-A- 4 154 222      US-A- 4 266 531
US-A- 4 282 856      US-A1- 2013 118 479**

## Description

## Subject of the invention

The present invention relates to a vortex generator for a solar air collector, comprising said vortex generator of the solar system for heating air and to the method of heating the air using said solar system. According to this solutions, it is possible to provide more effective and extremely simple device for heating enclosed spaces and to supply technological heat in an environmentally friendly manner without polluting the air.

Moreover, due to present solution, it is possible to supply solar heat of the desired temperature of comfort to enclosed spaces with a simultaneous reduction of harmful air pollution and the emission of greenhouse gases.

## Field of the invention

The development of contemporary civilization is based on energy obtained mainly from the burning of fossil fuel. The rapid development of civilization fosters an increasing demand for energy, resulting in an increase in global warming together with increase in intensive air pollution, leading to a noticeable increase in diseases related to the cardiovascular system and diseases of the upper respiratory track. The world-wide community defines these problems (the Kyoto and Paris Protocols) and determines the admissible thresholds of the commonly accepted increase in global warming. Moreover, one searches for a solution to this problem by defining the fields related to both ecological production of energy as well as more effective utilization of it, e.g. by reduction of its losses in the construction sector. Simultaneously with the requirements of limiting energy loss in the construction sector, one looks for solutions related to the production of energy from renewable energy sources, i.e. so-called pure, green energy. A natural and primary source of renewable energy is the sun, which provides energy by radiation, which can be converted into electrical and thermal energy. However, full utilization of energy of the sun in order to cover the human demand for energy without the burning of fossil fuels still faces barriers related to the low efficiency of conversion of solar energy into usable energy, through which the cost of producing green energy from solar radiation is incomparably higher than the cost of producing energy from the burning of fossil fuels.

Thus, new solutions are constantly being developed in order to reduce the costs of producing green energy, consisting of the increase of energy efficiency of solar technology. Especially intensive research related to direct conversion of solar radiation energy into thermal energy contained in the air is performed, due to the fact that a person feels discomfort when he or she dwells at a temperature lower than the temperature of comfort. Developing solar technologies providing maximum conversion of solar radiation energy into utility heat will allow for a drastic reduction of thermal energy production costs, leaving the burning of fossil fuels economically unjustified.

During times of increased global warming, intensified air pollution, resulting, among other things, in the generation of undesired smog, and constantly increasing costs of producing pure energy, one searches for eco-innovative solutions, including solutions concerning heating devices, which, when provided with sufficient source of utility heat for heating enclosed spaces and thus supplying technological heat, would significantly reduce the emission of harmful gases, chemical substances and dust. It is especially important to provide such systems that would be simple and inexpensive in operation, which in fact would contribute to their universal availability.

In the light of the aforementioned priorities, more and more interest is devoted to systems using solar energy. In this field, there are many differentiated systems using solar energy, used both for private household and industrial applications. However, due to the different degree of exposure to the sun, which varies based on geographical location or season of the year, there is an on-going research concerning such cost-effective system / circuit / device which would be characterized by increased efficiency with the simultaneous condition of being compact in size, e.g. one proportional to the cubature of the heated room, allowing for its practical applicability.

## Prior art

Patent application CN 203572053U discloses a two-layer solar air collector, wherein the heated air is forced into the space between the solar glass and the absorber and is returned into the space under the absorber and over the thermal insulation. In order to provide full contact of the air forced through the collector with the absorber surface, the top layer of the collector is fitted with longitudinal crossbars, and the bottom part of the collector is fitted with crosswise crossbars. According to the disclosure, it is preferable to force the air through a single air duct formed by longitudinal and crosswise crossbars determining the route of air flow. The aforementioned solution is aimed at increasing the time the air particles are present in the collector chambers by extending the route of air flow, resulting in a significant increase in the rise of temperature of the heated air. This solution discards the issue related to energy (heat) transfer efficiency due to significant drawbacks of the solution consisting in even greater heat loss related to the motion of air directly under the collector glass. The increased motion of air, necessary in this solution, increases the heat transfer between the colder glass and the heated air as a result of the heat transfer coefficient, which in the case of glass is significant and is approximately equal to the coefficient typical for water (W = 0.6 W/mK), leading to a loss of heat received from the absorber surface. Heat loss increases together with the increase in flow rate through the collector, which in this case is a serious drawback, because this limits the volume of air passing through the collector, allowing only for obtaining an increase of air temperature with low efficiency and only at small difference in temperatures and with no movement of air inside the collector.

However, this kind of air flow cannot pick off the near-wall layer of air by the absorber. Although the publication recommends turbulent air flow through the two-layer solar system, the heat transfer in the collector takes place as a result of heat conduction typical for laminar flow. The term "air turbulence" as used in the publication is not justified, because factors necessary to obtain air turbulence, such as, among other things, significant air flow rate, are not provided due to increasing heat losses in the top layer of the collector together with the increasing rate of air flow.

Another publication of utility model CN102121799U discloses the option of generating turbulence of fluid passing the collector; however, in contrast to the aforementioned system, this focuses rather on a liquid-type collector. The proposed solution cannot be simply transposed to the utility solutions related to heating gases, because fluids differ from gases in their physical properties, such as: specific weight 1.2 kg/m3 in the case of air and 1000 kg/m3 in the case of water, heat transfer W=0.02 W/mK for air and 0.6 W/mK for water.

Patent publication US 2010/0206297 A1 discloses, in turn, a solar system, wherein air is heated in the internal space of the collector by the heated absorber surface as a result of forced convection of air sucked in by the common collector, wherein the air is sucked in from the surface above the absorber through holes made in it. The disclosed system has basic drawbacks, limiting its application only to the ventilation of premises with initially heated air, wherein the thermal energy capacity passing together with air into the internal space of the collector through a perforated absorber surface depends on ambient air temperature and air motion (wind). Air in motion, passing over the absorber surface, leads to its cooling, and thus limits the volume of energy transferred via forced convection in the internal collector space. Another drawback of the disclosed solution is exposure of the absorber surface to direct ambient factors, including air dust, which effectively blocks the route of air flow through the absorber holes. Details of the solution, presented in the figures, wherein the main air supplying the collector enters through a wide duct to a series of collectors, and part of the air is sucked in from over the absorber surface through holes in the absorber, show that the volume of air supplying the system through the absorber holes is minor and depends on natural air flow outside the collector. The efficiency of heat transfer of the presented system is low, because heat transfer takes place via convection, and gain of turbulence leading to intensive heat transfer is negligible due to the very low pressure difference between the internal and external space of the collector at the place of perforation due to the negligible resistance of air flow supplying the collector via large side walls of a series of collectors.

Another patent publication DE 10023833 discloses a type of collector, wherein air at a significant rate is forced into an air duct of the meandrically positioned collector, the flow of which at the collector inlet is determined as laminar along the entire duct cross-section. The surface of the air duct has holes, as detailed in the publication, through which air is sucked into the air duct from the air layer between the air duct and solar glass. The air, at atmospheric pressure, penetrates the layer between the solar glass and the air duct and is sucked inside the air duct. The solution according to DE 10023833 can be characterized by a significant increase of temperature of heated air with an efficiency reaching 60%, maintaining the volume of air, defined in the description, entering the collector, together with its detailed quantitative division to air forced into the duct and air sucked through the perforated absorber surface. A significant drawback of the solution is the susceptibility of the collector to ambient conditions, such as ambient temperature or air motion (wind). With a negative ambient temperature and even minor air motion induced by thermal currents or wind, the air motion inside the collector between the solar glass and air duct surface results in an increased negative heat transfer (heat loss) through the solar glass. This results in a cooling of the absorber air duct, and the heat transfer drops far beyond the value stated by the author for ideal conditions, i.e. 60%. The increase of air flow rate through the air duct results in increase air flow through the duct holes, and thus significantly increases heat losses through the solar glass. The aforementioned reasoning is confirmed by the author, classifying the disclosed solution as a source of heat of high temperature for regeneration of absorber beds in heat accumulators of zeolite and silica gel type.

However, any of the aforementioned documents as well as those known to the Applicant, do not suggest the existence of such solar system, which would be highly efficient, thus economically justified and allowing for effective and controllable direct heating of utility premises with air at the temperature of comfort (according to proper standards concerning temperature inside utility premises), regardless of the solar radiation intensity and ambient (external) temperature.

All of the abovementioned solutions are still burdened with numerous imperfections, such as low practical thermal efficiency of devices, reaching a maximum of 60%, or limited practical application, mostly for ventilation with initially heated air (which does not eliminate the necessity to burn fossil fuels in order to reach the temperature of comfort). Moreover, the solutions according to the art depend highly upon the ambient conditions, and the cost of their production is unacceptable from the practical applicability standpoint.

On the other hand, any of the aforementioned documents, as well as those known to the Applicant, do not suggest the existence of such solar system which would be highly efficient, thus economically justified and allowing for effective and controllable heating of enclosed areas, both in residential buildings and commercial premises, to the required temperature, especially the temperature of comfort, regardless of any ambient parameters of the heated room, including its location, time of day or season of year.

For this reason, the need exists to search for new, more effective solutions in the area of solar air systems, which would provide for the creation of such solar air systems which could be applied for direct heating as an alternative heating system.

Present inventor unexpectedly found that by designing a new vortex generator that forces air into the air ducts of new generation air collectors of turbulent flow, one may obtain a higher efficiency of heat transfer.

This increase in heat transfer allows for practical application of such collectors for effective heating of both residential buildings as well as commercial buildings, with full control over the temperature of the air supplied to the premises, regardless of solar radiation intensity.

Moreover, the inventor unexpectedly found that an increased thermal transfer efficiency in the solar collectors is achieved by a vortex generator, which is inexpensive to produce and which is located at the inlet of the straight section of the collector air duct.

Air of turbulent flow generated in the vortex generator, as opposed to air of laminar flow, due to higher energy, and thus a higher rate and differentiated direction of flow in the vortex, can be characterized by the ability of effective picking off the near-wall layer of air representing an insulation barrier. Due to the generated vortices, air particles in the flow are in direct contact with the absorber surface, thus heat transfer in the solar absorber according to the invention takes place first and foremost via thermal conduction.

The method of heating the air developed by the present inventor allows for control of the temperature of heated air by creating a system of three parallel air ducts of a meandrical pattern, which, prior to the air discharged from the collector, can be returned to the collector inlet in one, two or three ducts, depending on the decrease in solar radiation intensity. Closing three ducts and returning the air to the collector inlet is applied only when starting the collector at an ambient temperature equal or lower than the inside temperature of the heated room in order to prevent a supply of air of lower temperature into the heated room. In turn, the system of closing and opening the dampers of ambient air and warm air inside the building allows for effective heating of premises at a negative ambient temperature and low intensity of solar radiation by introducing warm air from the building into the collector and heating this air. The ambient air damper system, with proper energy supplied from solar radiation, allows for mixing the building air with fresh ambient air with simultaneous ventilation of a room. With full exposure of the sun, at maximum solar radiation intensity, air is drawn in only from outside, providing effective ventilation.

Control and air mixing systems are included in the collector, which promote the use of collector batteries on building walls or roofs, where partial shading of the building has no effect on thermal results, as each of the collectors works individually.

## Detailed description of the invention

Present invention relates to a solar air system comprising:

- at least one air duct (A, B, C) for heat transfer, having a cross-sectional area of the air duct, wherein the air duct has a fixed cross-section along its entire length,
- air inlet duct 44 in fluid connection with air duct to supply air to it for heat transfer purposes, having a cross-section of the inlet duct 44, and
- fan system in fluid connection with the inlet duct to supply air to it for heat transfer purposes,

wherein
the fan system is configured to supply an air stream having a static pressure higher than the static pressure of the axial fan, and
the system additionally comprises at least one resonator installed in the air duct to change the air flow from laminar to turbulent,
the inlet duct 44 is configured to supply an air stream to the resonator at an angle to the resonator surface,
wherein the cross-section of the inlet duct 44 is less than the cross-section of the air duct of the air system.

In the invention, the inlet duct 44 is configured to supply an air stream to the resonator 26 at an angle of about 30° to about 60°, more preferably about 40° to about 50°, most preferably about 45°. The fan system comprises a radial fan 33. In a preferable embodiment, the fan system is integrated with the inlet duct 44.

According to the preferred embodiment, the ratio of the cross-section of the inlet duct 44 to the cross-section of the air duct is from about 1:2 to about 1:5, preferably about 1:4.

According to the invention, the air duct has at least one bulkhead 22, which divides the air duct into air subducts A1, A2, A3; however, the resonator is installed on the bulkhead 22 at an angle $\alpha$. More preferably, the air duct has two bulkheads 22, which divide the air duct into three air subducts A1, A2 A3, and each of the bulkheads has a separate resonator. In an even more preferable embodiment, the resonators are oriented at an angle in relation to the bulkhead 22 and wherein, these are positioned at an angle from about 60° to about 120°, more preferably at an angle of 90°, in relation to each other.

According to another preferred embodiment of the solar air system according to the invention, the air duct has at least one bulkhead 22, which divides the air duct into air subducts A1, A2, A3, and wherein the resonator 26 is installed in the inlet duct 44 at an angle α. More preferably, the air duct has two bulkheads 22, which divide the air duct into three air subducts A1, A2 A3, and each of the bulkheads has a separate resonator 26. In an even more preferable embodiment, the resonator 26 is oriented in parallel to the bulkhead 22.

In yet another preferable embodiment, the fan system includes at least one suction duct to introduce additional volumes of air into the system.

In still another embodiment, the resonator is fitted with a means of angle adjustment in relation to the air stream.

Preferably, the solar air system according to the invention comprises at least one meander A1-A2, A2-A3, B1-B2, B2-B3, C1-C2, C2-C3. More preferably, the meander comprises an additional resonator 26, as mentioned above, positioned at the beginning of the rectilinear meander section.

Present invention provides also a method of heat transfer in the system, wherein the solar air system according to the invention is used.

Unless defined otherwise, all technical and/or scientific terms used herein have the same meaning as those commonly understood by a person having ordinary skill in the art, to whom this invention belongs. The terms used in the invention are used to describe individual elements and not to limit the scope of the invention. Any publications, patent applications, patents and other information mentioned herein are incorporated in their entirety by reference. In the event of doubt as to the exact meaning of each of the technical and/or scientific terms used herein, see the references for clarification.

The term "bypass" as used herein means an additional air duct 25 located directly below the three collector air ducts, to which air is returned from one or more, if desirable, namely two or three air ducts before being discharged from the collector 1 after opening the valves 13, 14, 15 separating the collector air ducts from the bypass.

According to the description, "temperature of comfort" means the temperature of a room within a range defined by proper standards concerning the temperature in utility rooms, specifically a temperature between 16°C and 25°C. Exemplary temperatures of comfort, to which the air can be heated using the system according to the invention, cover temperatures selected from among 16°C, 17°C, 18°C, 19°C, 20°C, 21°C, 22°C, 23°C, 24°C and 25°C.

The term "temperature of stagnation" as used in the description means the temperature to which the air duct is heated with a maximum intensity of solar radiation at stopped air flow.

According to the description, an insulator can be any layer of thermal insulation made, for example, of phenolformaldehyde foam PF or a layer of insulation made of ceramic paper with silicon-aluminium fibres or silicone foam, as well as a layer of steady air.

As used herein, the term "capacity" means the volume of air produced by the collector.

As used herein, the term "efficiency" means the efficiency of the thermal transfer in the device, including losses.

Whenever in the description term "turbulent flow" is mentioned, this means turbulent flow with vortices oriented crosswise and/or rectilinear, with a chaotic motion and with significant kinematic energy of a particle motion. In the turbulent flow, intensive mixing of fluid layers occurs, preferably a gas such as air.

When the term "laminar flow" is used herein, this means a layered flow, when the fluid, preferably a gas such as air, flows in non-mixing layers.

The term "resonator" as used herein means a resonator, made of a spring plate, more preferably of a steel plate, which is hit by a stream of air at a given angle and velocity within the range of 8 to 12 m/s. According to this description, the resonator plate is rigidly fixed at one side, the height of which cannot exceed the height of the air duct, and allows for free motion (plate vibrations without contact with duct walls).

The term "absorber" as used herein means a material able to absorb and release solar radiation, especially in the form of a coating of air duct from the side of the solar radiation, in the form of a selective layer absorbing solar radiation energy applied on the heat conducting base, especially aluminium or copper sheet.

The term "air duct" means any element of the solar collector system that is used to guide air volume. In the preferred embodiment of the invention, the air duct has a form of a tube, more preferably of a rectangular cross-section, made of aluminium sheet with a thickness of 0.4 mm with a galvanized layer absorbing solar radiation energy and with the remaining sides of the rectangle in the shape of the letter "U" made of aluminium sheet with a thickness of 0.5 mm. Preferably, the rectangle representing the cross-section has one side of the rectangle of a length equal to 1/3 of the second side of the rectangle.

The term "generator trailing edge" means the resonator side of a height less than the air duct height, positioned freely inside the air duct.

Unless otherwise stated in the description, the term "about" is used to describe that the stated values are approximate. For example, the term "about", when used in relation to the temperature, means that temperature deviations of 30%, 25%, 20%, 15%, 10% or 5% are included in the temperature value. Similarly, the term "about", when used in relation to the cross-section ratio or an angle or inclination or incidence, means that deviations of such ratio or inclination or incidence angle differing from the stated value by 30%, 25%, 20%, 15%, 10% or 5% are also included in the mentioned values.

All aspects of the invention will be more apparent to persons having ordinary skill in the art after reading the detailed description, in light of the practical embodiments presented in the following examples.

**Practical embodiments of the invention**

The solution according to the invention is described below based on practical embodiments as shown in the following figures:

Fig. 1 presents a top view of the solar collector together with vortex generators A, B, C, each of which comprises a separate fan system connected to the inlet of three collector air subducts (fig. 1a) and with an assembly of vortex generators with a single fan system connected to three air subducts (fig. 1b);

Fig. 2 presents a cross-sectional view A-A of the solar collector, in which is shown the location of positioning the assembly of vortex generators A, B, C connected to the inlet of three collector air ducts;

Fig. 3 presents a longitudinal-sectional view B-B of the solar collector, in which is shown the location of positioning the assembly of vortex generators A, B, C connected to the inlet of three collector air ducts;

Fig. 4 presents the solution of the assembly of vortex generator A, B, C;

Fig. 5 presents the vortex generator with one common radial fan;

Fig. 6 presents a cross-sectional view of the air duct together with fixed duct walls;

Fig. 7 presents the connection of the top cover of the air duct with the bottom part of the duct;

Fig. 8 presents the temperature increase $\Delta T_{SAH}$ achieved in the solar system according to the invention in the function of solar light flux intensity I determined for the solar system at an air flow rate of 110 $m^3$/h for panel a) and 80 $m^3$/h for panel b);

Fig. 9 presents the thermal output of the solar system according to the invention $\eta_A$ in the function of solar light flux intensity I determined for the solar system at an air flow rate of 110 $m^3$/h for panel a) and 80 $m^3$/h for panel b) .

The solar system according to the invention heats the air with solar radiation energy converted into thermal energy with unexpectedly high efficiency.

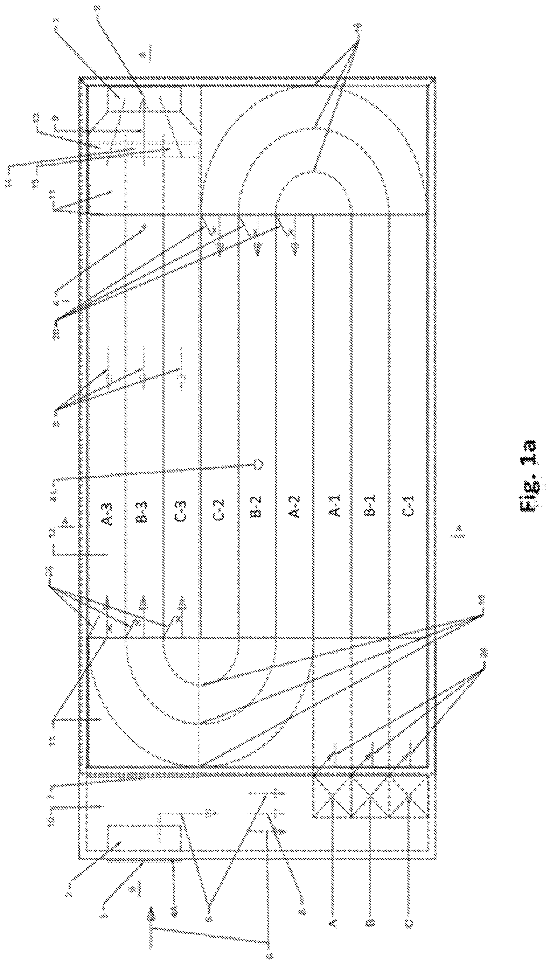

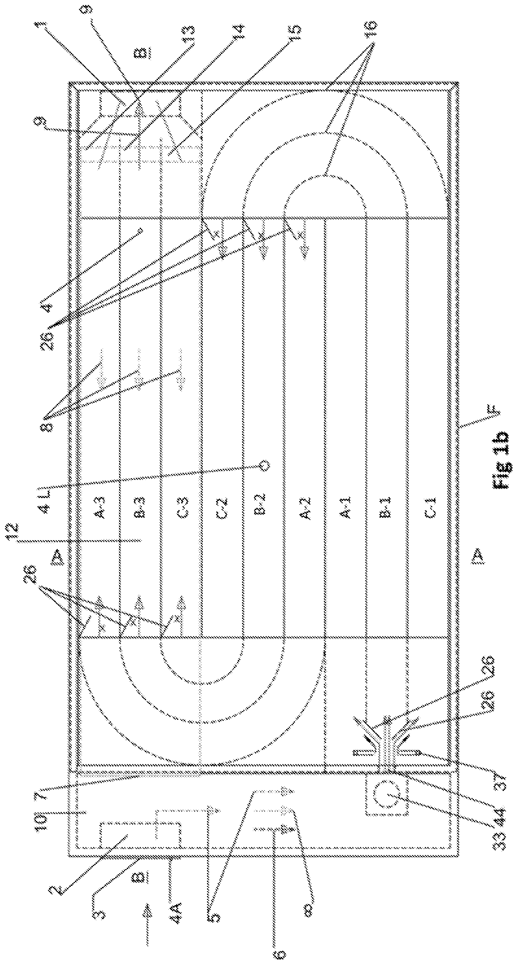

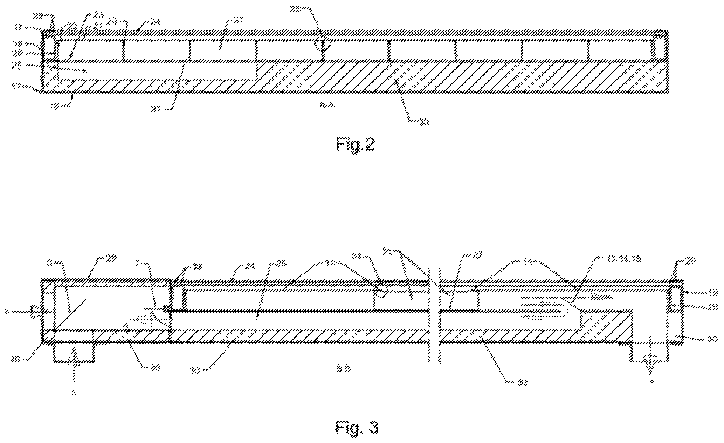

Practical realizations of the solar system according to the invention are presented in Fig. 1-7. In one aspect, the solar system according to the invention is housed in a casing F of the solar collector. Inside the casing F, two separate sections are provided - an air mixing section and a heat transfer section. The air mixing section 10 adjacently houses the air intake from a building 2 and the air intake from the outside with a filter and valve 3. Next to the air intake, an ambient temperature sensor 4A is located. A crosswise bulkhead, opposite to the air intake from room 2 and air intake from the outside 3, is fitted with an air inlet to the heat transfer section. In the heat transfer section, the solar collector has a glass coating layer, top layer of the insulator, heat exchanger layer and bottom layer of the insulator. The glass coating is preferably solar glass 24. The top layer of the insulator is preferably a layer of steady ambient air 20, immobilized between the layer of the glass coating and the layer of the heat exchanger. The bottom layer of the insulator is preferably a high-temperature ceramic layer 27 and thermal insulation layer of phenolic foam 30. The heat exchanger layer includes the layer of the absorber 21, 11 coating and of the air duct, limited from the top by the layer with the absorber 21, 11 coating, side walls representing a bulkhead 22 of the air duct and the layer of the bottom of the air duct 23. Preferably, the absorber 21, 11 coating is an aluminium layer coated by a selective absorbing coating. In the heat exchanger layer, at the air inlet, a resonator (s) 26 is / are provided. In one embodiment, just before air outlet 1, three valves 13, 14, 15 are provided to return air through the valve 7 using a bypass 25 to the air mixing section 10. In another embodiment (not shown), just before the air outlet 1, heat accumulators are provided, made of, for example, PCN material, to accumulate the surplus of heat.

The air supplying the solar system is fed to the solar system using a stream 6 directly from the atmosphere, a stream 5 of heated air from a room or a stream 9 from the closed circuit in the solar system. In another embodiment of the solar system according to the invention, the supply air is fed in the form of a mixture of streams 5, 6 and 9. In yet another embodiment of the invention, the supply air is fed using a controlled share of streams 5, 6 and 9.

The supply air is sucked into the solar system with the negative pressure of the fan system, especially using the radial fan or system of radial fans A, B, C, located in the air mixing section 10 of the solar system. The air mixing system 10 is separated from the ambient and the thermal transfer section by means on an insulated casing F using thermal insulation 30 and with a cover 29 from the top, made of sheet insulated with insulation 30.

Air sucked from the air mixing section 10 is forced into the air subduct(s) designated as a subduct(s) A-1, B-1, C-1 in the heat transfer section. The air ducts A-1, A-2, A-3, B-1, B-2, B-3, C-1, C-2, C-3 (also referred to as subducts) are placed in a single plane of the collector, together with the fan system, and within the entire collector, they have the same height and width, and thus fixed, constant cross-section. In the solar air system comprising at least on air duct A-1, A-2, A-3, B-1, B-2, B-3, C-1, C-2, C-3, the air inlet duct 44, fan system consisting of the radial fan(s) 33 and resonator 26, air sucked from the mixing section 10 has a rectilinear velocity in the inlet duct 44 from about 6 m/s to about 12 m/s. The air outlet from the radial fan 33, representing the inlet duct 44, is tightly connected with the hole of the air duct A-1, B-1, C-1 and directs the air flow at an angle from about 30° to about 60°, in a preferred embodiment of the invention from about 40° to about 50°, especially at an angle of 45° to the plane of the resonator 26. In a practical embodiment of the invention, the resonator is represented by a rectangular plate of spring material rigidly fixed in the inlet duct 44. In another practical embodiment of the invention, the resonator is represented by a rectangular plate of spring material rigidly fixed on the bulkhead 22. The dimension of the longest resonator side is less than twice the height of the resonator 26 plate.

The height of the resonator plate is less than the height of the air duct A-1, B-1, C-1 in order to provide space between the resonator plate and the absorber 21 and 11 cover of the air ducts and between the resonator plate and the bottom of the air duct 27. The space between the resonator plate and the absorber 21 and 11 cover and the space between the resonator plate and the bottom of the air duct 27 provides for the absence of physical contact of the resonator with the top and bottom cover of the air duct. The resonator is located in the air duct A-1, B-1, C-1 at a distance equal to 1/3 of the width of the air duct A-1, B-1, C-1. The stream of air leaving the fan 33 at an angle 45° to the resonator plane incidents on the resonator plane at a distance not more than 1/2 of the length of the resonator 6. The ratio of the cross-section of the inlet duct 44 to the cross-section of the air duct is about 1:3. However, in another embodiment of the invention, the ratio of the cross-section of the inlet duct 44 to the cross-section of the air duct is about 1:3. In yet another embodiment, the ratio of the cross-section of the inlet duct 44 to the cross-section of the air duct is about 1:4.

The stream of air hitting the resonator 26 puts the generator into mechanical vibrations transferring additional kinematic energy to air particles.

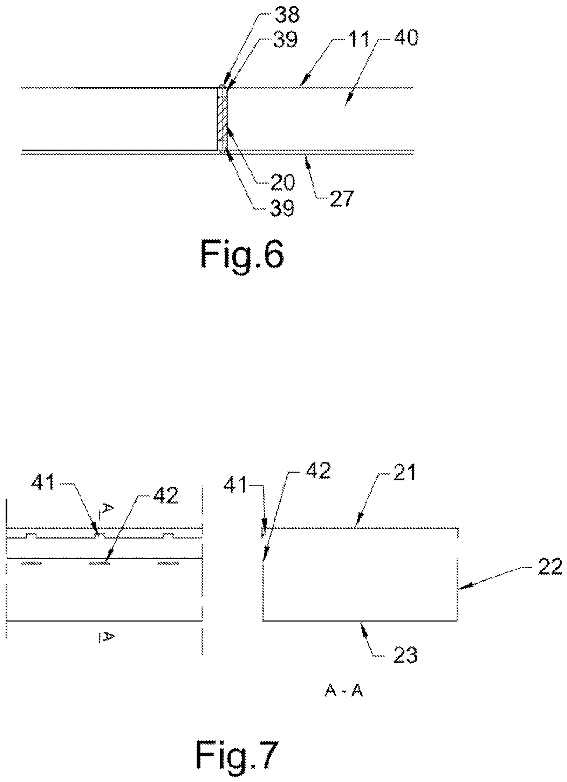

As shown in fig. 6 and fig. 7, the air duct A-1, B1, C1 has a cross-section in the shape of a rectangle, the side walls of which represent bulkheads 22 of aluminium sheet. The side walls of the air duct are formed of two bulkheads 22 with a thermal insulation layer 20 provided between them, made of 2 mm thick ceramic paper. To seal the air duct and dampen the vibrations generated by air turbulence generated in the vortex generator, the space created between the bulkheads 22 forming the air duct side, in their top and bottom part in contact with absorber cover 11, 21 adequately and the bottom of the air duct 27, a layer of glue 39 is applied, such as silicone glue. The top and bottom wall of the air duct are connected to each other using pins 38 with spherical ends, the stem of which, penetrating the thermal insulation layer through a layer of the silicone glue 39 applied in the space between the bulkheads 22 of the air duct, has a corrugated surface that allows for removing the pin from the place of installation. The pins are positioned along the line of the bulkhead 22 of the air duct, at a distance that guarantees obtaining a full seal of the air duct.

The air ducts A-1, A-2, A-3, B-1, B-2, B-3, C-1, C-2, C-3 coated, at least partially, with a uniform covering surface of the absorber 21 absorbing the solar radiation, represent a heat exchanger separated with a layer of thermal insulation 20 from the casing F and with a layer of thermal insulation 27 and a layer of thermal insulation 30 of phenolic foam from the bottom, however, from the top the air ducts are insulated from the ambience using a layer of steady air closed with a solar glass.

The air duct A-1, A-2, A-3, B-1, B-2, B-3, C-1, C-2, C-3 covers rectilinear and curved sections in order to create meanders A1-A2, A2-A3, B1-B2, B2-B3, C1-C2, C2-C3. In one of the embodiments, the height and width of the curved section of the air duct A-1, A-2, A-3, B-1, B-2, B-3, C-1, C-2, C-3 is larger than the width of the rectilinear section of the air duct A-1, A-2, A-3, B-1, B-2, B-3, C-1, C-2, C-3 and the height of the rectilinear duct A-1, A-2, A-3, B-1, B-2, B-3, C-1, C-2, C-3 by a value that allows for inserting into the curved section of the air duct A-1, A-2, A-3, B-1, B-2, B-3, C-1, C-2, C-3 the ends of the rectilinear section of the air duct A-1, A-2, A-3, B-1, B-2, B-3, C-1, C-2, C-3 to a minimum depth of 100 with the applied layer sealing the connection. Sealing the air duct at the location of changing of the rectilinear section of the air duct of the rectilinear section of the air duct A-1, A-2, A-3, B-1, B-2, B-3, C-1, C-2, C-3 into the curved section of the air duct of the rectilinear section of the air duct A-1, A-2, A-3, B-1, B-2, B-3, C-1, C-2, C-3 can be made using high-temperature silicone. The rectilinear section of the air duct of the rectilinear section of the air duct A-1, A-2, A-3, B-1, B-2, B-3, C-1, C-2, C-3 has a rectangular cross-section and is covered with an absorbing 21 cover made of aluminium sheet covered by a solar radiation absorbing layer, bent to the sides of a length of such a bend that allows for making tabs 41 spaced at a distance from each other not less than 50 mm. The walls of the air duct A-1, A-2, A-3, B-1, B-2, B-3, C-1, C-2, C-3 along the rectilinear sections are made of aluminium sheet of a thickness of 0.5 mm bent into the shape of the letter "U" and form the bulkheads 22 and the bottom of the duct 23. The bulkhead 22 is fitted with recesses 42, the width of which are twice the width of the tab 41. In some embodiments, the recess has the form of a cut out. The distance of the recess 42 in the bulkhead 22 of the air duct A-1, A-2, A-3, B-1, B-2, B-3, C-1, C-2, C-3 from its top edge provides an accurate match for the connection between the absorber 21 cover and the bulkhead 22 by means of a tab 41 entering the recess 42. Such a connection provides adherence of the top edge of the bulkhead 22 to the bottom part of the absorber 21 cover with simultaneous provision of mobility of the absorber 21 cover in relation to the bulkhead 22. Thus, the air duct A-1, A-2, A-3, B-1, B-2, B-3, C-1, C-2, C-3, along the rectilinear section, represents a rigid structure with a moving cover which passes, regardless of the number of meanders, into the flexible sections bent at the curve, wherein the place of connection is sealed. Such an implementation of the air duct allows for full compensation of the rectilinear extension of the air duct, caused by high temperature, especially a temperature of stagnation.

The radius of the curve 16, along which the air duct A-1, A-2, A-3, B-1, B-2, B-3, C-1, C-2, C-3 bends, is equal for the outermost of the co-linear air ducts A-1, B1 three-times the width of the air duct A-1, A-2, A-3, B-1, B-2, B-3, C-1, C-2, C-3 along a rectilinear section. The internal radius of the air ducts B-1, B-2, C-1, C-2 is reduced accordingly. At the end of the curved section of the air duct A-1, A-2, A-3, B-1, B-2, B-3, C-1, C-2, C-3, at the curve 16 from the internal side, the layer of the air stream adhering to the curve wall hits another resonator 26 at the inlet to the next rectilinear section of the air duct A-2, A-3, B-2, B-3, C-2, C-3. Such resonator has a form of a plate fixed rigidly or by means allowing for control of the angle, which partially covers the cross-section of the duct A-2, A-3, B-2, B-3, C-2, C-3. In one embodiment, the resonator 26, installed at the inlet to another rectilinear section of the air duct A-2, A-3, B-2, B-3, C-2, C-3, is positioned at an angle of 45 degrees in relation to the direction of air flow. In other embodiments, the resonator 26 is positioned at an angle of 30, 40, 50 and 60 degrees in relation to the direction of air flow. The change of the resonator 26 angle affects air flow resistance, affecting the volume of air flowing through the collector air duct, and thus changing the rate of temperature increase and heat transfer efficiency. Each time, the air, after leaving the curved section of the air duct A-1, A-2, B-1, B-2, C-1, C-2 at the curve 16, hits another resonator 26, at the trailing edge 32 of which, a flux of air is picked off and other vortices generated. After passing the last rectilinear section of the air duct A-3, B-3, C-3, the air moves towards the outlet 1. In one embodiment, upstream the inlet 1 positioned perpendicularly to the air flow in the air duct, the gates of the valves 13, 14, 15 are positioned in the bottom of the air duct A-3, B-3, C-3. The gate of the valve 13, 14, 15, when being opened, closes the air flow to the outlet 1, and the pressure generated with the operation of the fans in the assembly of vortex generators A, B, C sucks heated air back into the bypass 25 through the valve 7 to the air distribution chamber.

When only one valve 13, 14, 15 is open, heated air from this duct heats the air in the mixing section that enters the heat transfer section.

With a fixed increase of temperature, proper for temporary insolation intensity, the temperature of air leaving the collector from the two air ducts operating with closed valves 14 and 15 will be increased by 1/3.

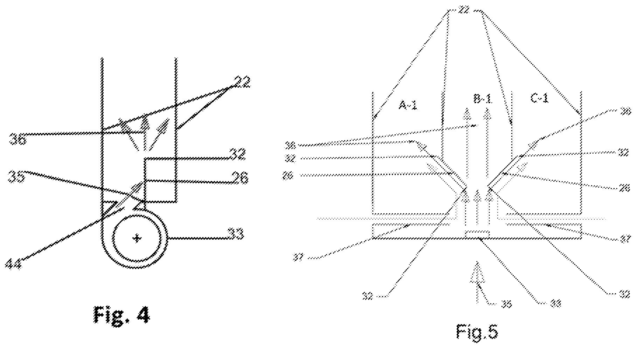

The solar system for heating the air, as described above, was tested in order to assess its efficiency. Tests were performed for five months at ambient temperatures from +2°C to +27°C, with two rates of air flow, i.e. 110 m3/h and 80 m3/h. A panel of the following parameters was used during the tests: width - 0.97 m, height - 1.67 m, thickness - 0.1 m, wherein the collector surface exposed to solar radiation was 1.49 m2. In the tested solar system, an aluminium plate covered with a proper coating that provided the absorber plate with a high coefficient of absorption of solar radiation (absorption coefficient = 0.97) was used as an absorber to heat the air. The top layer placed in the fixing profile was provided by a glass coating of a thickness of 3.2 mm. The insulation material, used in the tests of the solar system to heat the air, was phenolic foam, wherein the thickness of the insulation layer was 20 to 50 mm, and thermal conductivity λ was 0.02 W/m/K. The tested solar system was equipped with a vortex generator, as presented in fig. 4 or fig. 5, and with the system controlling the angle of inclination, which allowed for changing the position of the solar panel within the range from 0 to 90 degrees in relation to the surface, on which the solar system according to the invention was fixed. The total area of the panel was 1.7 m2, and the area exposed to solar radiation $A_A$ was 1.53 m2.

During the tests, the air was sucked in by means of an assembly of radial fans. The rate of flow was set within 50 m3/h to 120 m3/h. The air temperature at the inlet and outlet was measured using resistive temperature sensors type PT1000. A multichannel data recorder was used to record and gather test results within one-minute time interval. Meteorological parameters were monitored using an automatic meteorological station integrated with a wireless recorder. The following parameters were measured and recorded within a one-minute interval: air temperature, speed and direction of wind, air humidity and intensity of solar radiation. The tested panel was positioned at a fixed angle of 32 degrees in a southern exposure. During the tests, the following parameters were measured: temperature of air at the inlet and outlet of the solar system, stream of air flow volume, intensity of solar radiation, temperature and humidity of internal air and speed and direction of the wind. The data was recorded within one-minute intervals. Thermographic photos of the external surface of the device were also taken. During the tests, one observed significant fluctuations of both the radiation (from 0 to 1200 W/m2) and air temperature (from 2 to 27°C), wherein wind speed was mostly stable.

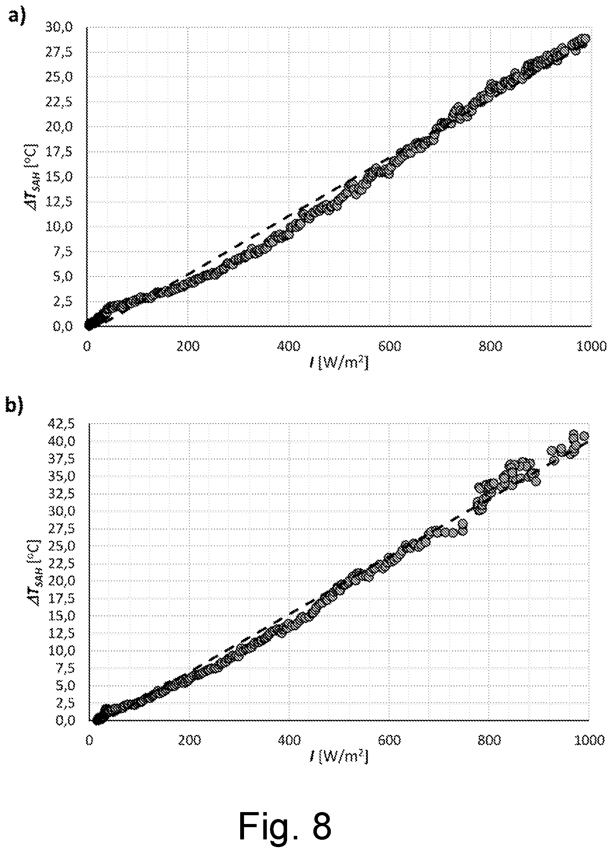

Based on the obtained results, it was possible to determine the thermal efficiency of solar radiation conversion to heat and an increase in air temperature after heating in the solar system according to the invention. As shown in fig. 8, the temperature increase $\Delta T_{SAH}$ achieved in the solar air system according to the invention, in the function of solar light flux intensity I determined for the solar system according to the invention, at an air flow rate 110 m3/h (panel a)) and 80 m3/h (panel b)), is basically linear. With a lower air flow rate (panel b)), the maximum increase of temperature exceeds 40 °C. As it is well known, an increase of flow rate causes a reduction of temperature increase; however, the result obtained with a higher air speed, namely close to 30°C, is also very good.

Using a simple dependence:

$$\Delta T_{SAH} = T_{out} - T_{in}.$$

where $T_{out}$ is the temperature of air at the outlet from the solar system, and $T_{in}$ is the temperature of air introduced to the solar system, the coefficients of inclination were calculated, resulting in 0.0293 (panel a)) and 0.0414 (panel b)).

Then, according to the equation

$$q_{SAH} = \frac{V_a \cdot \rho_a \cdot c_a \cdot \Delta T_{SAH}}{A_A}.$$

where $V_a$ is the air flow rate m³/s, pa is the air density kg/m³, and $c_a$ is the heat capacity of air J*K/kg, the power of the solar system was calculated $q_{SAH}$.

Based on the equation below, the following was calculated:

$$\eta_A = \frac{V_a \cdot \rho_a \cdot c_a \cdot \Delta T_{SAH}}{I \cdot A_A}$$

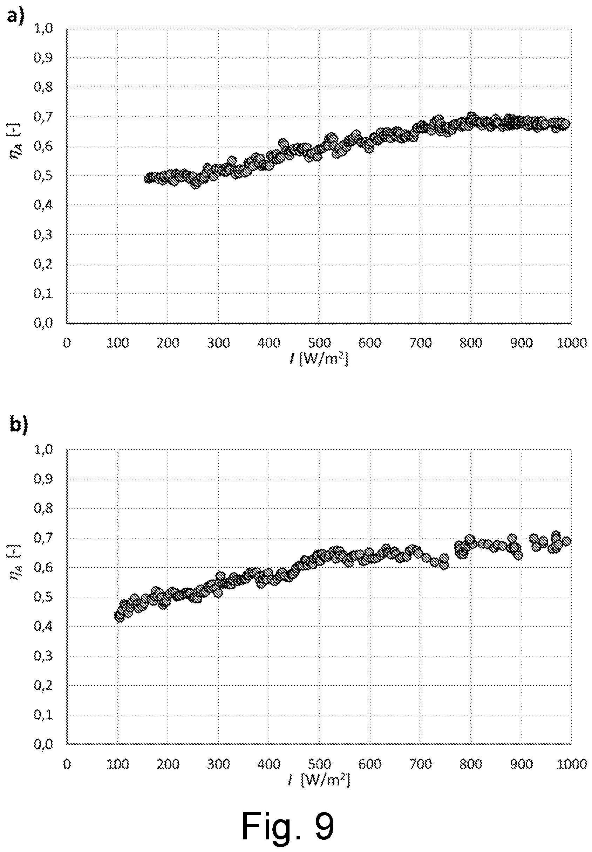

thermal efficiency of the solar system according to the invention $\eta_A$ defined as the useful energy produced via conversion of solar radiation into thermal energy in relation to the total radiation absorber is exposed to. The obtained results are presented in fig. 9. An analysis of the obtained dependencies leads to the conclusion that the efficiency of the tested solar system is within the range of 50% to 70%. The energy efficiency of the tested system increases together with the intensity of solar radiation. This dependence is similar to both tested intensities of air flow. The efficiency of solar energy conversion of the solar system is much higher than the efficiency presented in the prior art for the best available solutions on the market.

This invention was described in detail in relation to specific embodiments of its practical implementation. Persons having ordinary skill in the art will notice that various modifications of the presented embodiments are possible without deviating from the general concept of the invention and the scope of protection defined by the enclosed claims. An embodiment other than those disclosed herein will be apparent to persons having ordinary skill in the art, based on the disclosure and general knowledge.

As mentioned above, numerous publications were referenced herein. It is assumed that the content of the referenced documents is included in the description in the form of references, useful not only for a complete definition of the art, but also to provide a more extensive description of the claimed solutions.

**Number designations used in the description**

1    air outlet
2    air inlet from a building
3    air inlet from the outside with filter - valve
4A   ambient air temperature sensor
4 I  heated air temperature sensor
4L   light sensor
5    air stream from a building
6    air stream from outside
7    air inlet with bypass - valve
8    air stream from bypass
9    heated air to a building
10   air mixing section
11   flat absorber section
12   section of absorber straight ducts
13   bypass check valve
14   bypass check valve
15   bypass check valve
16   curve (curved guide vane in the absorber)
A    vortex generator assembly
B    vortex generator assembly
C    vortex generator assembly
X    vortex generator along curves
17   collector external frame
18   collector back wall
19   collector internal frame
20   thermal insulation between ducts
21   air duct absorber coating
22   bulkhead
23   rectilinear air duct bottom
24   solar glass
15   bypass
26   resonator
27   ceramic thermal insulation
28   connection of the absorber air duct
29   sealing of the solar glass
30   main sealing of the collector
31   rectilinear air duct of the collector
32   resonator trailing edge
33   radial fan
34   connection of flat absorber with duct absorber
35   air sucked in from outside
36   turbulent air
37   suction duct
38   pin with spherical head
39   glue
40   air duct of the section with flat absorber
41   duct absorber cover tab
42   duct absorber cover tab hole
44   inlet duct

**Claims**

1.   Solar air system comprising:

- at least one air duct (A-1, A-2, A-3, B-1, B-2, B-3, C-1, C-2, C-3) for heat transfer, the at least one air duct having a predetermined cross-section fixed along its entire length, and
- an air inlet duct (44) in fluid connection with the air duct, to supply air to the air duct for heat transfer, the air inlet duct having a predetermined cross-section which is less than the cross-section of the air inlet duct,
**characterized in that**
the system further comprises at least one vortex generator assembly (A, B, C) comprising a vortex generator (26) consisting of at least one resonator plate (26), the vortex generator being located at the inlet of the straight section of the air duct (A-1, B-1, C-1) for heat transfer, the vortex generator assembly (A,B,C) further comprising a fan system with at least one radial fan (33), the resonator plate (26) being a spring plate, preferably a steel plate, rigidly fixed at one side, wherein the height of the spring plate does not exceed the height of the air duct and allows for free plate vibrations without contact with the walls of the air duct,
wherein the air outlet from the radial fan (33) being the inlet duct (44) directs the air flow at an angle from about 30° to about 60° to the plane of the resonator plate (26),
wherein the stream of air hitting the resonator plate (26) puts the resonator plate (26) into mechanical vibrations transferring additional kinematic energy to air particles.

2. System according to claim 1, **characterized in that** the system comprises three parallel air ducts (A-1, B-1, C-1)each separated by a bulkhead (22) and splitting up from the straight section of the one air duct at the inlet of which the radial fan (33) is located.

3. System according to claim 1, **characterized in that** the system comprises three parallel air ducts (A-1, B-1, C-1), each separated by a bulkhead (22), and each having the radial fan (33) located at the inlet of its straight section.

4. Solar air system according to any of the claims 1-3, **characterized in that** the ratio of the cross-section of the inlet duct (44) to the cross-section of the air duct is from about 1:2 to about 1:5, preferably about 1:4.

5. Solar air system according any of the claims 1-4, **characterized in that** the outlet from the radial fan (33) is oriented perpendicularly to the main axis of the air duct (A-1,B-1,C-1) and the plate resonator (26) of the vortex generator assembly (A, B, C) is oriented at an angle in relation to the bulkhead (22) .

6. Solar air system according to any of the claims 1-5, **characterized in that** the plate resonator (26) of the vortex generator assembly is oriented in parallel to the bulkhead (22) and the outlet from the radial fan (33) is oriented an at angle to the main axis of the air duct.

7. Solar air system according to any of the claims 1-6, **characterized in that** the fan system includes at least one suction duct (37) to introduce additional volumes of air into the system.

8. Solar air system according to any of the claims 1-7, **characterized in that** the plate resonator (26) is provided with means for angle adjustment in relation to the air stream.

9. Solar air system according to any of the claims 1-8 **characterized in that** the air duct is of meandered shape and comprises at least two rectilinear sections (A1-A2, A2-A3, B1-B2, B2-B3, C1-C2, C2-C3).

10. Solar air system according to claim 9, **characterized in that** an additional plate resonator (26) is positioned at the beginning of the second and/or subsequent rectilinear section (A-2,B-2, C-2, A-3,B-3,C-3) of the meandered shape air duct.

11. Method of thermal transfer in a solar air system, **characterized in that** the solar air system according to any of the preceding claims 1 - 10 is used.

**Patentansprüche**

1. Solarluftsystem umfassend:

   - mindestens einen Luftkanal (A-I, A-2, A-3, B-I, B-2, B-3, C-I, C-2, C-3) zur Wärmeübertragung, wobei der mindestens eine Luftkanal einen vorbestimmten Querschnitt aufweist, der über seine gesamte Länge fixiert ist, und
   - einen Lufteinlasskanal (44) in Fluidverbindung mit dem Luftkanal, um dem Luftkanal Luft zur Wärmeübertragung zuzuführen, wobei der Lufteinlasskanal einen vorbestimmten Querschnitt hat, der kleiner als der Querschnitt des Lufteinlasskanals ist,
   **dadurch gekennzeichnet, dass**
   das System ferner mindestens eine Wirbelgeneratoranordnung (A, B, C) umfasst, die einen Wirbelgenerator (26) umfasst, der aus mindestens einer Resonatorplatte (26) besteht, wobei der Wirbelgenerator am Einlass des geraden Abschnitts der Luftleitung (A-I, B-I, C-I) zur Wärmeübertragung angeordnet ist, wobei die Wirbelgeneratoranordnung (A, B, C) ferner ein Lüftersystem mit mindestens einem Radiallüfter (33) umfasst, wobei die Resonatorplatte (26) eine Federplatte, vorzugsweise eine Stahlplatte, ist, die an einer Seite starr befestigt ist, wobei die Höhe der Federplatte die Höhe des Luftkanals nicht übersteigt und freie Plattenschwingungen ohne Kontakt mit den Wänden des Luftkanals ermöglicht,
   wobei der Luftauslass aus dem Radiallüfter (33), der der Einlasskanal (44) ist, den Luftstrom in einem Winkel von etwa 30° bis etwa 60° zur Ebene der Resonatorplatte (26) lenkt,

wobei der auf die Resonatorplatte (26) auftreffende Luftstrom die Resonatorplatte (26) in mechanische Schwingungen versetzt, die zusätzliche kinematische Energie auf Luftteilchen übertragen.

2. System nach Anspruch 1, **dadurch gekennzeichnet, dass** das System drei parallele Luftkanäle (A-I, B-I, C-I) umfasst, die jeweils durch eine Trennwand (22) getrennt sind und sich von dem geraden Abschnitt des einen Luftkanals trennen, an dessen Einlass der Radiallüfter (33) angeordnet ist.

3. System nach Anspruch 1, **dadurch gekennzeichnet, dass** das System drei parallele Luftkanäle (A-I, B-I, C-I) umfasst, die jeweils durch eine Trennwand (22) getrennt sind und bei denen jeweils der Radiallüfter (33) am Einlass ihres geraden Abschnitts angeordnet ist.

4. Solarluftsystem nach einem der Ansprüche 1-3, **dadurch gekennzeichnet, dass** das Verhältnis des Querschnitts des Einlasskanals (44) zum Querschnitt des Luftkanals von etwa 1:2 bis etwa 1:5, vorzugsweise etwa 1:4, beträgt.

5. Solarluftsystem nach einem der Ansprüche 1-4, **dadurch gekennzeichnet, dass** der Auslass des Radiallüfters (33) senkrecht zur Hauptachse des Luftkanals (A-1, B-I, C-I) ausgerichtet ist und der Plattenresonator (26) der Wirbelgeneratoranordnung (A, B, C) unter einem Winkel in Bezug auf die Trennwand (22) ausgerichtet ist.

6. Solarluftsystem nach einem der Ansprüche 1-5, **dadurch gekennzeichnet, dass** der Plattenresonator (26) der Wirbelgeneratoranordnung parallel zur Trennwand (22) orientiert ist.
und der Auslass des Radiallüfters (33) in einem Winkel zur Hauptachse des Luftkanals orientiert ist.

7. Solarluftsystem nach einem der Ansprüche 1-6, **dadurch gekennzeichnet, dass** das Lüftersystem mindestens einen Ansaugkanal (37) aufweist, um zusätzliche Luftvolumina in das System einzuführen.

8. Solarluftsystem nach einem der Ansprüche 1-7, **dadurch gekennzeichnet, dass** der Plattenresonator (26) mit Mitteln zur Winkeleinstellung in Bezug auf den Luftstrom versehen ist.

9. Solarluftsystem nach einem der Ansprüche 1-8, **dadurch gekennzeichnet, dass** der Luftkanal mäanderförmig ist und mindestens zwei geradlinige Abschnitte umfasst (A1-A2, A2-A3, BI-B2, B2-B3, C1-C2, C2-C3).

10. Solarluftsystem nach Anspruch 9, **dadurch gekennzeichnet, dass** ein zusätzlicher Plattenresonator (26)
am Anfang des zweiten und/oder
nachfolgenden geradlinigen Abschnitts (A-2, B-2, C-2, A-3, B-3, C-3) des mäanderförmigen Luftkanals angeordnet ist.

11. Verfahren zur Wärmeübertragung in einem Solarluftsystem, **dadurch gekennzeichnet, dass** das Solarluftsystem nach einem der vorstehenden Ansprüche 1 - 10 verwendet wird.

**Revendications**

1. Système solaire à air comprenant :

- au moins un conduit d'air (A-I, A-2, A-3, B-I, B-2, B-3, C-I, C-2, C-3) pour le transfert de chaleur, l'au moins un conduit d'air ayant une section transversale prédéterminée constante sur toute sa longueur, et
- un conduit d'entrée d'air (44) en connexion fluidique avec le conduit d'air, pour fournir de l'air au conduit d'air pour le transfert de chaleur, le conduit d'entrée d'air ayant une section transversale prédéterminée qui est inférieure à la section transversale du conduit d'entrée d'air, **caractérisé en ce que**
le système comprend en outre au moins un ensemble générateur de vortex (A, B, C) comprenant un générateur de vortex (26) constitué d'au moins une plaque de résonateur (26), le générateur de vortex étant situé à l'entrée de la section droite du conduit d'air (A-I, B-I, C-I) pour le transfert de chaleur, l'ensemble générateur de vortex (A, B, C) comprenant en outre un système de ventilateur avec au moins un ventilateur radial (33), la plaque de résonateur (26) étant une plaque de ressort, de préférence une plaque en acier, fixée rigidement d'un côté, dans lequel la hauteur de la plaque de ressort ne dépasse pas la hauteur du conduit d'air et permet des vibrations libres de la plaque sans contact avec les parois du conduit d'air,
dans lequel la sortie d'air du ventilateur radial (33) étant le conduit d'entrée (44) dirige le flux d'air selon un angle d'environ 30°à environ 60°par rapport au plan de la plaque de résonateur (26),
dans lequel le flux d'air frappant la plaque de résonateur (26) met la plaque de résonateur (26) en vibrations mécaniques transférant une énergie cinématique supplémentaire aux particules d'air.

**2.** Système selon la revendication 1, **caractérisé en ce que** le système comprend trois conduits d'air parallèles (A-I, B-I, C-I), chacun séparé par une cloison (22) et se séparant de la section droite du seul conduit d'air à l'entrée duquel le ventilateur radial (33) est situé.

**3.** Système selon la revendication 1, **caractérisé en ce que** le système comprend trois conduits d'air parallèles (A-I, B-I, C-I), chacun séparé par une cloison (22) et chacun ayant le ventilateur radial (33) situé à l'entrée de sa section droite.

**4.** Système solaire à air selon l'une quelconque des revendications 1-3, **caractérisé en ce que** le rapport de la section transversale du conduit d'entrée (44) à la section transversale du conduit d'air est d'environ 1:2 à environ 1:5, de préférence d'environ 1:4.

**5.** Système solaire à air selon l'une quelconque des revendications 1-4, **caractérisé en ce que** la sortie du ventilateur radial (33) est orientée perpendiculairement à l'axe principal du conduit d'air (A-1,B-I,C-I) et le résonateur en forme de plaque (26) de l'ensemble générateur de vortex (A, B, C) est orienté selon un angle par rapport à la cloison (22).

**6.** Système solaire à air selon l'une quelconque des revendications 1-5, **caractérisé en ce que** le résonateur en forme de plaque (26) de l'ensemble générateur de vortex est orienté parallèlement à la cloison (22)
et la sortie du ventilateur radial (33) est orientée selon un angle par rapport à l'axe principal du conduit d'air.

**7.** Système solaire à air selon l'une quelconque des revendications 1-6, **caractérisé en ce que** le système de ventilateur comprend au moins un conduit d'aspiration (37) pour introduire des volumes supplémentaires d'air dans le système.

**8.** Système solaire à air selon l'une quelconque des revendications 1-7, **caractérisé en ce que** le résonateur en forme de plaque (26) est pourvu de moyens pour le réglage de l'angle par rapport au flux d'air.

**9.** Système solaire à air selon l'une quelconque des revendications 1-8, **caractérisé en ce que** le conduit d'air est de forme sinueuse et comprend au moins deux sections rectilignes (A1-A2, A2-A3, BI-B2, B2-B3, C1-C2, C2-C3).

**10.** Système solaire à air selon la revendication 9, **caractérisé en ce qu'**un résonateur en forme de plaque supplémentaire (26)
est positionné au début de la deuxième et/ou suivante section rectiligne (A-2, B-2, C-2, A-3, B-3, C-3) du conduit d'air de forme sinueuse.

**11.** Méthode de transfert thermique dans un système solaire à air, **caractérisée en ce que** le système solaire à air selon l'une quelconque des revendications précédentes 1 - 10 est utilisé.

Fig. 1a

**Fig 1b**

EP 3 411 637 B1

Fig. 2

Fig. 3

Fig.5

Fig. 4

Fig.6

A - A

Fig.7

Fig. 8

a)

b)

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 203572053 U
- CN 102121799 U
- US 20100206297 A1
- DE 10023833